# EUROPEAN PATENT APPLICATION

(11) **EP 4 475 591 A1**
(43) Date of publication of application: **11.12.2024**
(21) Application number: 23830275.6
(22) Date of filing: 27.06.2023
(51) Int. Cl.: H04W 28/02, H04W 72/12

(54) **INFORMATION TRANSMISSION METHOD, AND ELECTRONIC DEVICE AND STORAGE MEDIUM**

(30) Priority: 30.06.2022 CN 202210771068
(71) Applicant: ZTE Corporation, Shenzhen, Guangdong 518057 (CN)
(72) Inventor: XING, Weimin, Shenzhen, Guangdong 518057 (CN); HU, Yuzhou, Shenzhen, Guangdong 518057 (CN); LU, Youxiong, Shenzhen, Guangdong 518057 (CN)
(74) Representative: Aipex B.V.
(86) International application number: PCT/CN2023/102884
(87) International publication number: WO 2024/002098

(57) **Abstract**

Provided are an information transmission method, an electronic device, and a storage medium. The method includes determining, according to received sidelink control information, that a resource conflict includes at least one of the following: a half-duplex resource conflict existing for a reserved resource of a second node or a resource reservation conflict existing between a reserved resource of a second node and a reserved resource of a third node; and determining, according to a specified condition, the second node for transmitting a resource conflict indication to. This solution takes into full consideration the information coordination capability between nodes, thereby reducing communication resource conflicts and improving the resource utilization rate.

## Description

### TECHNICAL FIELD

The present application relates to the field of wireless communications, particularly an information transmission method, an electronic device, and a storage medium.

### BACKGROUND

In a sidelink (SL) communication or direct communication system, when there is traffic to be transmitted, traffic data between devices is not forwarded through other network equipment, but is directly transmitted from the source device to the target device, that is, direct communication is performed between devices. Direct communication is referred to as SL communication hereinafter. SL communication can be divided into two communication modes. In a first mode, a resource for a user equipment (UE) to send sidelink signals are scheduled by a base station. In a second mode, a UE autonomously selects a resource from a network-configured or preconfigured resource pool according to a resource selection policy. Common resource selection policies include a sensing mechanism, a partial sensing mechanism, and a random selection mechanism. For the second mode, autonomous selection by a UE leads to more resource conflicts. Inter-UE coordination can reduce resource conflicts and improve the resource utilization rate. Therefore, it is required to highlight the resource coordination function among UEs in SL communication. In SL communication, to assist a second terminal (UE-B) with resource selection or reselection, a first terminal (UE-A) may send the following two types of coordination information: coordination information 1: a set of resources that the UE-B is expected to use for transmission or a set of resources that the UE-B is not expected to use for transmission; and coordination information 2: an indication from the UE-B that the resource to be used in the future will encounter a resource conflict, referred to as a resource conflict indication.

Currently, the coordination information 2 or the resource conflict indication is carried in a physical sidelink feedback channel (PSFCH) when transmitted. However, it is problematic in determining the UE-B involved in transmission of the resource conflict indication. For example, whether the UE-B has the capability to receive the coordination information and whether the UE-B can proactively detect and handle the resource conflict are not considered. As a result, there is a high probability of resource conflicts in SL communication and there is a waste of resources in SL communication.

### SUMMARY

Embodiments of the present application provide an information transmission method, an electronic device, and a storage medium to take into full consideration the information coordination capability between nodes, thereby reducing communication resource conflicts and improving the resource utilization rate.

An embodiment of the present application provides an information transmission method. The method includes determining, according to received sidelink control information, that a resource conflict includes at least one of the following: a half-duplex resource conflict existing for a reserved resource of a second node or a resource reservation conflict existing between a reserved resource of a second node and a reserved resource of a third node; and determining, according to a specified condition, the second node for transmitting a resource conflict indication to.

An embodiment of the present application provides an electronic device. The electronic device includes one or more processors and a memory configured to store one or more programs.

When executed by the one or more processors, the one or more programs cause the one or more processors to perform the information transmission method of any embodiment of the present application.

An embodiment of the present application provides a computer-readable storage medium. The computer-readable storage medium stores one or more programs which, when executed by one or more processors, cause the one or more processors to perform the information transmission method of any embodiment of the present application.

### BRIEF DESCRIPTION OF DRAWINGS

FIG. 1 is a flowchart of an information transmission method according to an embodiment of the present application.
FIG. 2 is a flowchart of an information transmission method according to an embodiment of the present application.
FIG. 3 is a flowchart of an information transmission method according to an embodiment of the present application.
FIG. 4 is a diagram illustrating the structure of an information transmission apparatus according to an embodiment of the present application.
FIG. 5 is a diagram illustrating the structure of an electronic device according to an embodiment of the present application.

### DETAILED DESCRIPTION

It is to be understood that the embodiments described herein are intended to explain the present application, not to limit the present application.

In the subsequent description, words for representing elements, such as "module", "component" and "unit" are merely used for facilitating the description of the present application and have no particular meanings in themselves. Therefore, "module", "component" and "unit" may be used in a mixed manner.

Currently, in the second mode of sidelink (SL) communication, the autonomous selection by a UE leads to more resource conflicts. In the related art, coordination between UEs can reduce resource conflicts. Currently, when determining the second terminal (UE-B) involved in transmission of a resource conflict indication, the following two problems occur:

Problem 1: In the case where the first terminal (UE-A) as the receiver cannot receive from UE-B, UE-A sends coordination information without considering whether UE-B can receive the coordination information or whether there is a valid resource on which the coordination information can be sent.

Problem 2: When UE-A discovers a resource conflict between the reserved resource of UE-B and the reserved resource of another UE (the third terminal), it is currently not considered whether UE-A sends coordination information to UE-B. The current approach only considers situations where the second UE can receive a resource conflict indication and the third UE cannot. It does not consider whether UE-B can autonomously detect and handle resource conflicts. For example, UE-B may use the pre-emption technology to identify and avoid conflicts with other UEs. In cases where UE-B cannot detect or handle resource conflicts, UE-A is required to send coordination information. Otherwise, UE-A may send no coordination information.

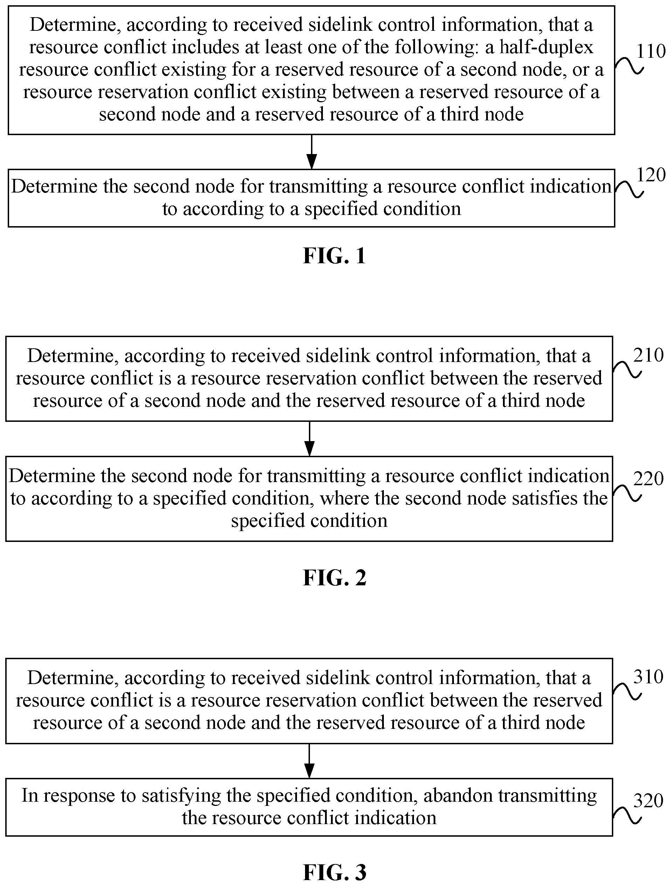

FIG. 1 is a flowchart of an information transmission method according to an embodiment of the present application. This embodiment of the present application can be applied to sidelink wireless communications. The method can be executed by the information transmission apparatus of the embodiment of the present application. The apparatus may be implemented by software and/or hardware. The apparatus is generally integrated in a terminal. See FIG. 1. The method of this embodiment of the present application includes the following steps:

In step 110, it is determined, according to received sidelink control information, that a resource conflict includes at least one of the following: a half-duplex resource conflict existing for a reserved resource of a second node or a resource reservation conflict existing between a reserved resource of a second node and a reserved resource of a third node.

In this embodiment of the present application, when as a first node for sidelink communications, the terminal may determine the resource conflict according to the received sidelink control information. The resource conflict includes the following two types.

First type: The terminal is a half-duplex device that can either receive or send at a certain time. The terminal detects the sidelink control information (SCI) of the second node. The SCI includes information about a reserved resource. The terminal is the receiver of the resource. However, limited by the half-duplex mode, the terminal finds it cannot receive data on this resource. That is, the terminal can send data but cannot receive data during the time period of the reserved resource, resulting in a resource conflict. This resource conflict can be identified as a half-duplex resource conflict of the reserved resource of the second node. In some embodiments, the SCI can also refer to first-type SCI carried in a physical sidelink control channel (PSCCH), namely SCI format 1-A.

Second type: The terminal receives SCI from the second node and SCI from the third node. The terminal detects from the SCI that the reserved resource of the second node overlap the reserved resource of the third node. In such case of resource overlap, it is required that the terminal be the receiver of the SCI reserved resource of the second node and the receiver of the SCI reserved resource of the third node. Alternatively, it is required that the terminal be the target receiver of the SCI reserved resource of the second node or the target receiver of the SCI reserved resource of the third node. Which is required may be configured by the protocol parameter typeAUEScheme2. When this parameter is enabled, it is required that the terminal be one of the target receiver of the SCI reserved resource of the second node or the target receiver of the SCI reserved resource of the third node. When this parameter is disabled, it is required that the terminal be the target receiver of the SCI reserved resource of the second node and the target receiver of the SCI reserved resource of the third node.

In step 120, the second node for transmitting a resource conflict indication to is determined according to a specified condition.

Specifically, in the case where the terminal detects the resource conflict, the terminal can determine whether the node satisfies the specified condition. When the node satisfies the specified condition, the terminal determines that this node is a second node that requires the transmission of the resource conflict indication and transmits the resource conflict indication to this node.

In an example embodiment, in the case where the resource conflict is the half-duplex resource conflict, that is, the terminal is the target receiver of the transmission on the reserved resource of the second node, but since limited by the half-duplex mode, the terminal is unable or unwilling to receive data on the reserved resource. The specified condition includes at least one of the following: The receiving capability indication for the resource conflict indication of the second node in the sidelink control information is enabled; the transmission occasion of the resource conflict indication is valid; or the receiving time of the sidelink control information is at least a first minimum interval threshold earlier than the transmission occasion of the resource conflict indication.

In this embodiment of the present application, when the terminal detects SCI and determines that the resource conflict is the half-duplex resource conflict, the specified condition used by the terminal to determine the second node may include the following:

If the receiving capability indication for the resource conflict indication in the sidelink control information is enabled, for example, if the higher-layer parameter indicationUEB Scheme2 is enabled, the sidelink control information transmitted by the node to the terminal includes information indicating that the node has the capability to receive the resource conflict indication, for example, the field indicationUEB flag in the SCI sent by the node is set to 1.

The transmission occasion of the resource conflict indication is valid. In an example, the transmission occasion may be determined by the transmission time of the sidelink control information or by the time of the reserved resource. In an example, the transmission occasion of the resource conflict indication corresponding to the node and determined by the transmission time of the sidelink control information satisfies that the transmission occasion of the resource conflict indication is located in the first slot containing a PSFCH resource in the resource pool that is at least a first minimum interval threshold later than the transmission time of the sidelink control information, and there is at least a second minimum interval threshold between the time of the reserved resource and the transmission occasion of the resource conflict indication. In an example, the transmission occasion of the resource conflict indication corresponding to the node and determined by the time of the reserved resource satisfies that the transmission occasion of the resource conflict indication is located in the first slot containing a PSFCH resource in the resource pool that is at least a first minimum interval threshold earlier than the time of the reserved resource, and there is at least a first minimum interval threshold between the transmission time of the sidelink control information and the transmission occasion of the resource conflict indication. That the transmission occasion of the resource conflict indication corresponding to the node is valid means that the transmission occasion determined by the transmission time of the sidelink control information or by the time of the reserved resource has not yet passed.

The receiving time of the sidelink control information is at least a first minimum interval threshold earlier than the transmission occasion of the resource conflict indication. The first minimum interval threshold may be configured or preconfigured by a network or defined by a protocol. For example, the higher-layer parameter sl-MinTimeGapPSFCH provides the value of the first minimum interval threshold. The time interval between the receiving time of the sidelink control information of the node and the transmission occasion is greater than or equal to the first minimum interval threshold.

Specifically, when the node satisfies one or more of the preceding specified conditions, the node can be determined as a second node that can receive the resource conflict indication, and the terminal can transmit the resource conflict indication to the second node.

In another example embodiment, in the case where the resource conflict is the half-duplex resource conflict, the specified condition includes the following: The transmission occasion of the resource conflict indication is at least a second minimum interval threshold earlier than reserved resource of the half-duplex resource conflict.

In this embodiment of the present application, the specified condition used by the terminal to determine the second node may also include the following: The transmission occasion of the resource conflict indication of the node is earlier than the time corresponding to the reserved resource where the half-duplex resource conflict occurs, and the time length between the transmission occasion and the time corresponding to the reserved resource is greater than the second minimum interval threshold. The second minimum interval threshold may be configured or preconfigured by a network or defined by a protocol. For example, the value of T3 defined by the protocol provides the value of the second minimum interval threshold.

FIG. 2 is a flowchart of an information transmission method according to an embodiment of the present application. This embodiment of the present application is based on the previous embodiment. Referring to FIG. 2, the method of this embodiment of the present application includes the following steps:

In step 210, it is determined, according to received sidelink control information, that a resource conflict is a resource reservation conflict between the reserved resource of a second node and the reserved resource of a third node.

In this embodiment of the present application, a terminal determines that a resource conflict is present between the reserved resource of the second node and the reserved resource of the third node, that is, an overlap is present between the reserved resource of the second node and the reserved resource of the third node.

In step 220, the second node for transmitting a resource conflict indication to is determined according to a specified condition. The second node satisfies the specified condition.

Specifically, when the resource conflict occurs, the second node is detected to satisfy the specified condition, and the terminal may use this second node as a second node involved in transmission of the resource conflict indication.

In an example embodiment, the specified condition satisfied by the second node includes at least one of the following: The transmission occasion of the resource conflict indication is valid; the receiving time of the sidelink control information of the second node is at least a third minimum interval earlier than the transmission occasion of the resource conflict indication; the receiving capability indication for the resource conflict indication of the second node is enabled through the sidelink control information; or the third node does not satisfy a second specified condition.

In this embodiment of the present application, the second node can be determined as a second node involved in transmission of the resource conflict indication when the second node satisfies at least one of the following: The transmission occasion of the resource conflict indication is valid; the receiving time of the sidelink control information of the second node is earlier than the transmission occasion of the resource conflict indication, and the time interval between the receiving time and the transmission occasion is greater than a third minimum interval; the receiving capability indication for the resource conflict indication of the second node in the sidelink control information is enabled; or the third node does not satisfy a second specified condition.

In an example embodiment, the second specified condition includes at least one of the following: The transmission occasion of the resource conflict indication of the reserved resource of the third node is valid; the receiving time of the sidelink control information of the third node is at least a fourth minimum interval earlier than the transmission occasion of the resource conflict indication; or the receiving capability indication for the resource conflict indication is enabled through the sidelink control information of the third node.

In this embodiment of the present application, when it is determined that the second node is a second node involved in transmission of the resource conflict indication, the third node does not satisfy the second specified condition. The second specified condition includes at least one of the following: The transmission occasion of the resource conflict indication of the reserved resource of the third node is valid; the receiving time of the sidelink control information of the third node is earlier than the transmission occasion of the resource conflict indication, and the time interval between the receiving time and the transmission occasion is greater than a fourth minimum interval; or the receiving capability indication for the resource conflict indication in the sidelink control information of the third node is enabled.

In some embodiments, the specified condition satisfied by the second node includes at least one of the following: The priority value included in the sidelink control information of the second node is greater than or equal to the priority value included in the sidelink control information of the third node; the priority value included in the sidelink control information of the second node is less than the priority value included in the sidelink control information of the third node, and a preemption mode is not configured for a resource pool of a reserved resource, or no preemption mode parameter is provided, for example, the higher-layer parameter sl-PreemptionEnable is not provided; or the priority value included in the sidelink control information of the second node is less than the priority value included in the sidelink control information of the third node, and the priority value included in the sidelink control information of the second node is less than a priority threshold corresponding to the preemption mode configured for the resource pool of the reserved resource, for example, the higher-layer parameter sl-PreemptionEnable is provided, and the value of this parameter is not equal to "enabled".

In this embodiment of the present application, in the case where the resource conflict is the resource reservation conflict, the reserved resource of the second node overlap the reserved resource of the third node, and the specified condition used by the terminal to determine the second node involved in transmission of the resource conflict indication may include the following: 1. The priority value in the sidelink control information of the second node is greater than or equal to the priority value in the sidelink control information of the third node. 2. The priority value in the sidelink control information of the second node is less than the priority value in the sidelink control information of the third node, and the resource pool containing the overlapping reserved resource is not in the preemption mode. Whether this resource pool is in the preemption mode may be determined by whether the preemption mode of the resource pool is configured or whether the preemption mode parameter is provided. 3. The priority value in the sidelink control information of the second node is less than the priority value in the sidelink control information of the third node, and the resource pool containing the conflicting reserved resource is configured to be in the preemption mode. A priority threshold is set among the configuration parameters of the preemption mode. The priority value of the second node is less than this priority threshold.

In some embodiments, the specified condition satisfied by the second node also includes the following: The priority value included in the sidelink control information of the second node is less than the priority value included in the sidelink control information of the third node; and the priority value included in the sidelink control information of the third node is less than a priority threshold corresponding to the preemption mode configured for the resource pool of the reserved resource.

Specifically, when the second node is determined as a second node involved in transmission of the resource conflict indication, it may be determined that the priority value included in the sidelink control information of the second node is less than the priority value included in the sidelink control information of the third node and that a preemption mode is configured for a resource pool of the reserved resource of the resource conflict, configuration parameters corresponding to the preemption mode include a priority threshold, and the priority value of the second node is less than the priority threshold.

In an embodiment, the larger the priority value, the lower the priority level.

FIG. 3 is a flowchart of an information transmission method according to an embodiment of the present application. This embodiment of the present application is based on the previous embodiments. Referring to FIG. 3, the method of this embodiment of the present application includes the following steps:

In step 310, it is determined, according to received sidelink control information, that a resource conflict is a resource reservation conflict between the reserved resource of a second node and the reserved resource of a third node.

In step 320, in response to satisfying the specified condition, transmission of the resource conflict indication is abandoned.

Specifically, a terminal may detect whether a node satisfies the specified condition for abandoning transmitting the resource conflict indication. When the node satisfies the specified condition, the terminal does not transmit the resource conflict indication to the node.

In an example embodiment, the specified condition includes at least one of the following: The priority value included in the sidelink control information of the second node is less than the priority value included in the sidelink control information of the third node, and a preemption mode is configured for a resource pool of the reserved resource of the resource conflict; or the priority value included in the sidelink control information of the second node is less than the priority value included in the sidelink control information of the third node, and the priority value included in the sidelink control information of the second node is less than a priority threshold corresponding to the preemption mode configured for the resource pool of the reserved resource of the resource conflict.

In this embodiment of the present application, in the presence of a resource conflict between the second node and the third node, if the second node satisfies the specified condition, it is determined to abandon transmitting the resource conflict indication to the second node. The specified condition may include the following: 1. In the case where there is a resource conflict between the reserved resource of the second node and the reserved resource of the third node, and the resource pool containing the reserved resource is configured to be in the preemption mode, or the preemptive parameter of the resource pool is provided and set to "enabled", the priority value in the sidelink control information of the second node is less than the priority value in the sidelink control information of the third node. 2. In the case where there is a resource conflict between the reserved resource of the second node and the reserved resource of the third node, and the resource pool containing the reserved resource is configured to be in the preemption mode, the priority value of the second node is less than the priority threshold of the preemption mode of the resource pool, or the priority value of the second node is less than the priority threshold of the preemption mode of the resource pool.

In another example embodiment, the specified condition includes at least one of the following:

The priority value included in the sidelink control information of the second node is greater than the priority value included in the sidelink control information of the third node, and a preemption mode is configured for a resource pool of a reserved resource; or the priority value included in the sidelink control information of the second node is greater than the priority value included in the sidelink control information of the third node, and the priority value included in the sidelink control information of the third node is less than a priority threshold corresponding to the preemption mode configured for the resource pool of the reserved resource of the resource conflict.

Specifically, in the presence of a resource conflict between the second node and the third node, if the second node satisfies the specified condition, it is determined to abandon transmitting the resource conflict indication to the second node. The specified condition may include the following: 1. In the case where there is a resource conflict between the reserved resource of the second node and the reserved resource of the third node, and the resource pool containing the reserved resource is configured to be in the preemption mode, or the preemptive parameter of the resource pool is provided and set to "enabled", the priority value in the sidelink control information of the second node is greater than the priority value in the sidelink control information of the third node. 2. In the case where there is a resource conflict between the reserved resource of the second node and the reserved resource of the third node, and the resource pool containing the reserved resource is configured to be in the preemption mode, the priority value of the second node is greater than the priority threshold of the preemption mode of the resource pool, or the priority value of the second node is greater than the priority threshold of the preemption mode of the resource pool.

In an example embodiment, when the first UE detects SCI of the second UE and the detected SCI includes information about the reserved resource of the second UE, but finds a resource conflict of this resource present due to the half-duplex limitation, the condition under which the first UE determines the second UE and sends a PSFCH to the second UE to provide the resource conflict indication includes the following:
1. The first UE is the target receiver for transmission on the reserved resource of the second UE.
2. The first UE does not expect to receive data on the reserved resource of the second UE. For example, limited by the half-duplex mode, the first UE cannot receive data on this reserved resource.
3. The receiving capability indication for the resource conflict indication is enabled. The SCI sent by the second UE includes information indicating whether the second UE can receive the resource conflict indication. That is, the SCI of the second UE indicates that the second UE can act as UE-B to receive the resource conflict indication.
4. The transmission occasion of transmission of the resource conflict indication to the second UE is valid. That is, the transmission occasion has not yet passed.
5. The interval between the time the SCI of the second UE is received and the transmission occasion of the resource conflict indication is not less than the set minimum interval. That is, the time the SCI of the second UE is received is no later than a minimum interval earlier than the transmission occasion.

In other embodiments, when the first UE detects SCI of the second UE and SCI of the third UE and finds a resource conflict between the reserved resource of the second UE and the reserved resource of the third UE, the condition under which the first UE determines the second UE and sends a PSFCH to the second UE to provide the resource conflict indication includes the following.

In scenario 1, both the second UE and the third UE satisfy all conditions for receiving the resource conflict indication. These conditions may include the following.
1. The transmission occasion corresponding to the reserved resource of the second UE and the transmission occasion corresponding to the reserved resource of the third UE are both valid. That is, both of the transmission occasions have not passed.
2. Both the interval between the transmission occasion of the resource conflict indication and the SCI corresponding to the second UE and the interval between the transmission occasion of the resource conflict indication and the SCI corresponding to the third UE satisfy the minimum interval. That is, the receiving time of the SCI of the second UE and the receiving time of the SCI of the third UE are both at least the minimum interval earlier than the transmission occasion.
3. If the receiving capability indication for the resource conflict indication is enabled, both the second UE and the third UE indicate that they can receive the resource conflict indication.

Based on scenario 1, if the priority value P1 contained in the SCI of the second UE is greater than the priority value P2 contained in the SCI of the third UE, then the first UE determines the second UE as a node involved in transmission of the resource conflict indication and sends a PSFCH to the second UE to provide the resource conflict indication.

In some embodiments, the first UE can determine the second UE and send a PSFCH to the second UE to provide the resource conflict indication when the second UE satisfies the following condition:
4. The transmission occasion of the resource conflict indication is at least a second minimum interval earlier than the time of the resource conflict.

In scenario 2, only the second UE satisfies all the preceding conditions for receiving the resource conflict indication, the conditions under which the first UE sends a PSFCH to the second UE to provide the resource conflict indication include at least one of the following.
1. If the priority value P1 contained in the SCI of the second UE is greater than or equal to the priority value P2 contained in the SCI of the third UE, then the first UE determines to send a PSFCH to the second UE to provide the resource conflict indication.
2. If the priority value P1 contained in the SCI of the second UE is less than the priority value P2 contained in the SCI of the third UE, and preemption is not enabled in the resource pool, that is, preemption is not configured for the resource pool; or if the priority value P1 contained in the SCI of the second UE is less than the priority value P2 contained in the SCI of the third UE, and no configuration parameter of preemption in the resource pool is provided, then the first UE determines to send a PSFCH to the second UE to provide the resource conflict indication.
3. If the priority value P1 contained in the SCI of the second UE is less than the priority value P2 contained in the SCI of the third UE, there is a priority threshold Ppre for the configured preemption in the resource pool, and the value of P1 is greater than or equal to Ppre, then the first UE determines to send a PSFCH to the second UE to provide the resource conflict indication.
4. If the priority value P1 contained in the SCI of the second UE is less than the priority value P2 contained in the SCI of the third UE, there is a priority threshold Ppre for the configured preemption in the resource pool, and the value of P1 is less than Ppre, then the first UE determines to send a PSFCH to the second UE to provide the resource conflict indication.

Alternatively, only the second UE satisfies all the preceding conditions for receiving the resource conflict indication, the conditions under which the first UE sends a PSFCH to the second UE to provide the resource conflict indication include the following:

The transmission occasion of the resource conflict indication corresponding to the second UE is earlier than the time of the reserved resource in the resource conflict.

In some embodiments, only the second UE satisfies all the preceding conditions for receiving the resource conflict indication, the conditions under which the first UE sends a PSFCH to the second UE to provide the resource conflict indication include at least one of the following:
1. The transmission occasion corresponding to the reserved resource of the second UE is valid, that is, has not passed.
2. The interval between the receiving time of the SCI of the second UE detected by the first UE and the transmission occasion of the resource conflict indication satisfies the minimum interval.
3. If the receiving capability indication for the resource conflict indication is enabled, the second UE indicates that it can receive the resource conflict indication.
4. The third UE does not satisfy at least one of the following conditions:
   1. The transmission occasion of the resource conflict indication corresponding to the reserved resource of the third UE is valid, that is, has not passed.
   2. The receiving time of the SCI of the third UE detected by the first UE is the minimum interval earlier than the transmission occasion of the resource conflict indication.
   3. If the receiving capability indication for the resource conflict indication is enabled, the third UE indicates that it can receive the resource conflict indication.

In other embodiments, in some cases, the first UE may abandon sending a PSFCH to the second UE to provide the resource conflict indication, or the first UE may decide whether to send a PSFCH to the second UE to provide the resource conflict indication. These cases may include at least one of the following
1. The priority value P1 contained in the SCI of the second UE is less than or equal to the priority value P2 contained in the SCI of the third UE, and preemption is enabled for the resource pool.
2. The priority value P1 contained in the SCI of the second UE is less than or equal to the priority value P2 contained in the SCI of the third UE, there is a priority threshold Ppre for the configured preemption in the resource pool, and the value of P1 is less than or equal to Ppre.

In some embodiments, the conditions under which the first UE determines one UE or two UEs and sends a PSFCH to the second UE to provide the resource conflict indication include the following:

If, for a resource pool, the non-target receiver gives a feedback that the conflict indication is configured to be disabled, the first UE is the target receiver of the first reserved resource of the second UE and the target receiver of the second reserved resource of the third UE; or if, for a resource pool, the non-target receiver gives a feedback that the conflict indication is configured to be enabled, the first UE is at least the target receiver of the first reserved resource of the second UE or the target receiver of the second reserved resource of the third UE.

SCI of the second UE is detected. The SCI includes the priority value P1 and a reserved first resource for transmission.

SCI of the third UE is detected. The SCI includes the priority value P2 and a reserved second resource for transmission.

There is an overlap between the first resource and the second resource in terms of time and frequency.

The PSFCH transmission occasion of the resource conflict indication corresponding to the second UE is valid, that is, has not passed.

The capability to indicate the resource conflict indication in the SCI is enabled, and the SCI of the second UE indicates that the second UE can serve as UE-B to receive the resource conflict indication. For example, the indication value is 1.

The receiving time of the SCI of the second UE is not later than the configured minimum time interval before the PSFCH occasion of the resource conflict indication.

For the third UE, the first UE determines the second UE and sends a PSFCH to provide the resource conflict indication when at least one of the following conditions are satisfied:

The PSFCH occasion of the resource conflict indication corresponding to the third UE is invalid, that is, has passed.

The capability to indicate the resource conflict indication in the SCI is enabled, and the SCI of the third UE does not indicate that the third UE can serve as UE-B to receive the resource conflict indication. For example, the indication value is 0.

The receiving time of the SCI of the third UE is later than the configured minimum time interval before the PSFCH transmission occasion of the resource conflict indication.

The first UE determines to send a PSFCH to the second UE to provide the resource conflict indication, and the second UE satisfies at least one of the following conditions.

The priority value P1 contained in the SCI of the second UE is greater than or equal to the priority value P2 contained in the SCI of the third UE.

The priority value P2 contained in the SCI of the third UE is greater than or equal to the priority value P1 contained in the SCI of the second UE, and the second UE satisfies at least one of the following.

A preemption mode is not enabled for a resource pool of a reserved resource of the resource reservation conflict corresponding to the second UE, or no preemption enable parameter is provided.

A preemption enable parameter is provided for a resource pool of a reserved resource of the resource reservation conflict corresponding to the second UE, and the priority value P1 contained in the SCI of the second UE is greater than or equal to the priority threshold Ppre configured for preemption in the resource pool.

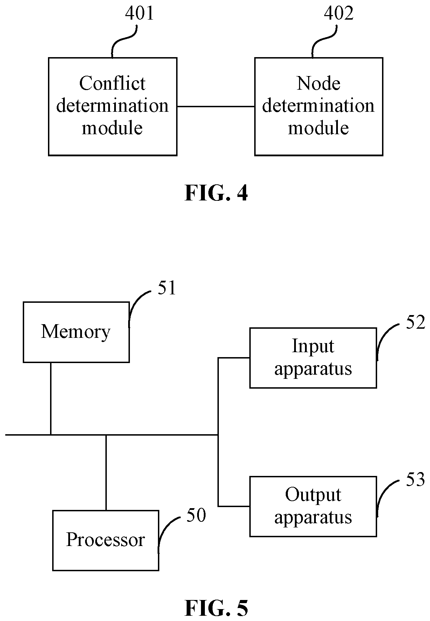

FIG. 4 is a diagram illustrating the structure of an information transmission apparatus according to an embodiment of the present application. The information transmission apparatus can perform the information transmission method of any embodiment of the present application and has the corresponding function modules and effects of the performed method. The apparatus can be implemented by software and/or hardware. Generally, the apparatus is integrated in a terminal. The apparatus includes a conflict determination module 401 and a node determination module 402.

The conflict determination module 401 is configured to determine, according to received sidelink control information, that a resource conflict includes at least one of the following: a half-duplex resource conflict existing for a reserved resource of a second node or a resource reservation conflict existing between a reserved resource of a second node and a reserved resource of a third node.

The node determination module 402 is configured to determine, according to a specified condition, the second node for transmitting a resource conflict indication to.

In some embodiments, for the apparatus, in response to the resource conflict being the half-duplex resource conflict, the specified condition includes at least one of the following: The receiving capability indication for the resource conflict indication of the second node in the sidelink control information is enabled; the transmission occasion of the resource conflict indication is valid; or the receiving time of the sidelink control information is at least a first minimum interval threshold earlier than the transmission occasion of the resource conflict indication.

In some embodiments, for the apparatus, in response to the resource conflict being the half-duplex resource conflict, the specified condition includes the following: The transmission occasion of the resource conflict indication is at least a second minimum interval threshold earlier than the reserved resource of the half-duplex resource conflict.

In some embodiments, for the apparatus, in response to the resource conflict being the resource reservation conflict, the second node satisfies the specified condition.

In some embodiments, the specified condition satisfied by the second node includes at least one of the following: The transmission occasion of the resource conflict indication is valid; the receiving time of the sidelink control information of the second node is at least a third minimum interval earlier than the transmission occasion of the resource conflict indication; the receiving capability indication for the resource conflict indication of the second node in the sidelink control information is enabled; or the third node does not satisfy a second specified condition.

In some embodiments, the second specified condition includes at least one of the following: The transmission occasion of the resource conflict indication of the reserved resource of the third node is valid; the receiving time of the sidelink control information of the third node is at least a fourth minimum interval earlier than the transmission occasion of the resource conflict indication; or the receiving capability indication for the resource conflict indication in the sidelink control information of the third node is enabled.

In some embodiments, for the apparatus, the specified condition satisfied by the second node includes at least one of the following: The priority value included in the sidelink control information of the second node is greater than or equal to the priority value included in the sidelink control information of the third node; the priority value included in the sidelink control information of the second node is less than the priority value included in the sidelink control information of the third node, and a preemption mode is not configured for a resource pool of a reserved resource, or no preemption mode parameter is provided; or the priority value included in the sidelink control information of the second node is less than the priority value included in the sidelink control information of the third node, and the priority value included in the sidelink control information of the second node is less than a priority threshold corresponding to the preemption mode configured for the resource pool of the reserved resource.

In some embodiments, for the apparatus, the specified condition satisfied by the second node also includes the priority value included in the sidelink control information of the second node is less than the priority value included in the sidelink control information of the third node, and the priority value included in the sidelink control information of the third node is less than a priority threshold corresponding to the preemption mode configured for the resource pool of the reserved resource.

In some embodiments, the node determination module 402 includes an indication abandoning unit.

The indication abandoning unit is configured to abandon transmitting the resource conflict indication.

In some embodiments, for the indication abandoning unit, the specified condition includes at least one of the following: The priority value included in the sidelink control information of the second node is less than the priority value included in the sidelink control information of the third node; and a preemption mode is configured for a resource pool of a reserved resource of the resource conflict; or the priority value included in the sidelink control information of the second node is less than the priority value included in the sidelink control information of the third node, and the priority value included in the sidelink control information of the second node is less than a priority threshold corresponding to the preemption mode configured for the resource pool of the reserved resource of the resource conflict.

In some embodiments, for the indication abandoning unit, the specified condition includes at least one of the following: The priority value included in the sidelink control information of the second node is greater than the priority value included in the sidelink control information of the third node, and a preemption mode is configured for a resource pool of a reserved resource; or the priority value included in the sidelink control information of the second node is greater than the priority value included in the sidelink control information of the third node, and the priority value included in the sidelink control information of the third node is less than a priority threshold corresponding to the preemption mode configured for the resource pool of the reserved resource of the resource conflict.

FIG. 5 is a diagram illustrating the structure of an electronic device according to an embodiment of the present application. The device electronic includes a processor 50, a memory 51, an input apparatus 52, and an output apparatus 53. One or more processors 50 may be included in the electronic device. One processor 50 is shown as an example in FIG. 5. The processor 50, the memory 51, the input apparatus 52, and the output apparatus 53 in the electronic device may be connected via a bus or in other manners. The connection via a bus is shown as an example in FIG. 5.

As a computer-readable storage medium, the memory 51 may be configured to store software programs, computer-executable programs, and modules, for example, modules (the conflict determination module 401 and the node determination module 402) corresponding to the data transmission apparatus in embodiments of the present application. The processor 50 runs the software programs, instructions, and modules stored in the memory 51 to perform function applications and data processing of the electronic device, that is, the preceding information transmission method is implemented.

The memory 51 may mainly include a program storage region and a data storage region, where the program storage region may store an operating system and an application program required by at least one function, and the data storage region may store data created according to use of the electronic device. Additionally, the memory 51 may include a high-speed random-access memory or a nonvolatile memory such as at least one disk memory, a flash memory, or another nonvolatile solid-state memory. In some examples, the memory 71 may further include a memory remotely disposed with respect to the processor 50. These remote memories may be connected to the electronic device via a network. Examples of the preceding network include, but are not limited to, the Internet, an intranet, a local area network, a mobile communication network and a combination thereof.

The input apparatus 52 may be configured to receive inputted digital or character information and generate key signal input related to user settings and function control of the electronic device. The output apparatus 73 may include a display device such as a display screen.

An embodiment of the present application provides a storage medium including computer-executable instructions. When executed by a computer processor, the computer-executable instructions cause the computer processor to perform an information transmission method. The method includes determining, according to received sidelink control information, that a resource conflict includes at least one of the following: a half-duplex resource conflict existing for a reserved resource of a second node or a resource reservation conflict existing between a reserved resource of a second node and a reserved resource of a third node; and determining, according to a specified condition, the second node for transmitting a resource conflict indication to.

From the preceding description of embodiments, it is apparent to those skilled in the art that the present application may be implemented by use of software and necessary general-purpose hardware or may be implemented by hardware. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the method in the embodiments of the present application.

It is to be noted that units and modules that are included in the embodiment of the apparatus are merely divided according to functional logic, and the division is not limited to this as long as the corresponding functions can be performed. Additionally, the specific names of function units are merely intended for distinguishing between each other and are not to limit the scope of the present application.

It is to be understood by those of ordinary skill in the art that some or all steps of the preceding disclosed method and function modules/units in the preceding system or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media include volatile and nonvolatile media as well as removable and non-removable media implemented in any method or technology for storing information (such as computer-readable instructions, data structures, program modules or other data). The computer storage media include, but are not limited to, a RAM, a ROM, an EEPROM, a flash memory or other memory technologies, a CD-ROM, a digital video disc (DVD) or other optical storages, a magnetic cassette, a magnetic tape, a magnetic disk or other magnetic storage devices, or any other medium that can be used for storing desired information and that can be accessed by a computer. Additionally, as is known to those having ordinary skill in the art, the communication media generally include computer-readable instructions, data structures, program modules or other data in carriers or in modulated data signals transported in other transport mechanisms and may include any information delivery medium.

## Claims

1. An information transmission method, comprising:
determining, according to received sidelink control information, that a resource conflict comprises at least one of the following:
a half-duplex resource conflict existing for a reserved resource of a second node, or a resource reservation conflict existing between a reserved resource of a second node and a reserved resource of a third node; and
determining, according to a specified condition, the second node for transmitting a resource conflict indication to.

2. The information transmission method of claim 1, wherein in response to the resource conflict being the half-duplex resource conflict, the specified condition comprises at least one of the following:
a receiving capability indication for the resource conflict indication is enabled, and the receiving capability indication of the second node indicates that the second node has capability to receive the resource conflict indication through the sidelink control information;
a transmission occasion of the resource conflict indication is not passed; or
a receiving time of the sidelink control information is at least a first minimum interval threshold earlier than a transmission occasion of the resource conflict indication.

3. The information transmission method of claim 1, wherein in response to the resource conflict being the half-duplex resource conflict, the specified condition comprises the following:
a transmission occasion of the resource conflict indication is at least a second minimum interval threshold earlier than the reserved resource with the half-duplex resource conflict.

4. The information transmission method of claim 1, wherein in response to the resource conflict being the resource reservation conflict,
the second node satisfies the specified condition.

5. The information transmission method of claim 4, wherein the specified condition satisfied by the second node comprises at least one of the following:
a transmission occasion of the resource conflict indication is not passed;
a receiving time of the sidelink control information of the second node is at least a third minimum interval earlier than a transmission occasion of the resource conflict indication;
a receiving capability indication for the resource conflict indication of the second node is enabled through the sidelink control information of the second node; or
the third node does not satisfy a second specified condition.

6. The information transmission method of claim 5, wherein the second specified condition comprises at least one of the following:
a transmission occasion of the resource conflict indication corresponding to the reserved resource of the third node is not passed;
a receiving time of the sidelink control information of the third node is at least a fourth minimum interval earlier than the transmission occasion of the resource conflict indication; or
a receiving capability indication for the resource conflict indication is enabled through the sidelink control information of the third node.

7. The information transmission method of claim 4, wherein the specified condition satisfied by the second node comprises at least one of the following:
a priority value comprised in the sidelink control information of the second node is greater than or equal to a priority value comprised in the sidelink control information of the third node;
the priority value comprised in the sidelink control information of the second node is less than the priority value comprised in the sidelink control information of the third node, and a preemption mode is not configured for a resource pool of a reserved resource with the resource reservation conflict, or no preemption mode parameter is provided for a resource pool of a reserved resource with the resource reservation conflict; or
the priority value comprised in the sidelink control information of the second node is less than the priority value comprised in the sidelink control information of the third node, and the priority value comprised in the sidelink control information of the second node is greater than or equal to a priority threshold corresponding to a preemption mode configured for a resource pool of a reserved resource with the resource reservation conflict.

8. The information transmission method of claim 4, wherein the specified condition satisfied by the second node comprises the following:
a priority value comprised in the sidelink control information of the second node is less than a priority value comprised in the sidelink control information of the third node; and the priority value comprised in the sidelink control information of the third node is less than a priority threshold corresponding to a preemption mode configured for a resource pool of a reserved resource with the resource reservation conflict.

9. The method of claim 1, wherein determining, according to the specified condition, the second node for transmitting the resource conflict indication to comprises:
in response to that the specified condition is satisfied, not transmitting the resource conflict indication.

10. The information transmission method of claim 9, wherein the specified condition comprises at least one of the following:
a priority value comprised in the sidelink control information of the second node is less than or equal to a priority value comprised in the sidelink control information of the third node, and a preemption mode is configured for a resource pool of a reserved resource with the resource conflict; or
a priority value comprised in the sidelink control information of the second node is less than or equal to a priority value comprised in the sidelink control information of the third node, and the priority value comprised in the sidelink control information of the second node is less than or equal to a priority threshold corresponding to a preemption mode configured for a resource pool of a reserved resource with the resource conflict.

11. The information transmission method of claim 9, wherein the specified condition comprises at least one of the following:
a priority value comprised in the sidelink control information of the second node is greater than a priority value comprised in the sidelink control information of the third node, and a preemption mode is configured for a resource pool of a reserved resource of the resource conflict; or
a priority value comprised in the sidelink control information of the second node is greater than a priority value comprised in the sidelink control information of the third node, and the priority value comprised in the sidelink control information of the third node is less than a priority threshold corresponding to a preemption mode configured for a resource pool of a reserved resource with the resource conflict.

12. An electronic device, comprising:
one or more processors; and
a memory in which one or more programs is stored,
wherein when executed by the one or more processors, the one or more programs cause the one or more processors to perform the information transmission method of any one of claims 1 to 11.

13. A computer-readable storage medium comprising a computer program which, when executed by a processor, perform the information transmission method of any one of claims 1 to 11.
